# EUROPEAN PATENT SPECIFICATION

(11) **EP 2 655 091 B1**
(45) Date of publication and mention of the grant of the patent: **29.10.2014**
(21) Application number: 11815592.8
(22) Date of filing: 23.12.2011
(51) Int. Cl.: C08K 5/548, C08L 9/06, C08C 19/25, C08L 9/00, C08K 3/36

(54) **METHOD OF PRODUCING A TREAD COMPOUND**
VERFAHREN ZUR HERSTELLUNG EINES LAUFFLÄCHENVERBUNDS
PROCÉDÉ DE PRODUCTION D'UN COMPOSÉ POUR CHAPE

(30) Priority: 23.12.2010 IT TO20101054
(43) Date of publication of application: 30.10.2013
(73) Proprietor: Bridgestone Corporation, Chuo-ku Tokyo 104-8340 (JP)
(72) Inventor: BOTTI, Francesco, I-00154 Roma (IT); CANTONETTI, Veronica, I-00156 Roma (IT); PRIVITERA, Davide, I-67051 Avezzano (IT)
(74) Representative: Bosman, Cesare
(86) International application number: PCT/IB2011/055952
(87) International publication number: WO 2012/085894

(56) References cited:
- EP-A1- 0 849 333
- EP-A1- 2 105 461
- EP-A1- 2 128 186
- EP-A2- 1 939 014
- WO-A1-2010/011345
- WO-A2-2004/005395
- US-A1- 2007 037 915
- US-A1- 2008 161 458

## Description

### TECHNICAL FIELD

The present invention relates to a method of producing a tread compound.

### BACKGROUND ART

As is known, part of the research carried out in the tyre industry is centred around improving tread performance in terms of wet-road-holding and rolling and wear resistance.

Whereas these three characteristics can be improved individually, it is much more difficult to improve all three simultaneously, without improvement in one impairing one or both of the others. Also, improvement must be achieved without increasing the viscosity, and so impairing the workability, of the compound.

For this purpose, silica has long been used as a reinforcing filler in tread compounds, as a partial or total substitute for carbon black, because of the advantages it affords in terms of rolling resistance and wet road-holding performance.

Silica is used in combination with silane coupling agents, which bond with silanol groups to prevent the formation of hydrogen bonds between silica particles, and at the same time bond the silica chemically to the polymer base.

The advantages of octyl-oleate, in terms of cold-weather performance, and of combining low- and high-molecular-weight SBR polymers, in terms of abrasion resistance, have long been known.

The trialkoxymercaptoalkyl-silane class of silane coupling agents has proved particularly interesting, especially as regards the advantages it affords in reducing rolling resistance and volatile substance emissions.

The most effective compound has been found to be:

SH (CH₂)₃Si(OCH₂CH₃)(O(CH₂CH₂O)₅(CH₂)₁₃CH₃)₂

Used simultaneously, however, these ingredients fail to achieve the same improvement as when they are used individually. In particular, trialkoxymercaptoalkyl-silanes, while improving compounds in terms of rolling resistance and hydrocarbon emissions, may at the same time jeopardize improvements obtainable by other ingredients in terms of abrasion resistance.

A need is therefore felt for a method of producing tread compounds, designed to solve the problems of the known art.

The Applicant has surprisingly devised a method of producing tread compounds, designed to meet this demand.

### DISCLOSURE OF INVENTION

According to the present invention, there is provided a method of producing a rubber compound, comprising mixing at least one cross-linkable unsaturated-chain polymer base, silica, a first type of silane coupling agent, and a second type of silane coupling agent; said method being characterized in that said second type of silane coupling agent is added to the mix after said first type of silane coupling agent has reacted with said silica.

Preferably, said first type of silane coupling agent is a trialkoxymercaptoalkyl-silane, and said second type of silane coupling agent is a mercaptosilane protected in the form of thioester.

Preferably, said method comprises a first mixing step of mixing at least said cross-linkable unsaturated-chain polymer base, 50 to 250 phr of said silica, and 2 to 30 phr of said trialkoxymercaptoalkyl-silane; a second mixing step, in which 2 to 15 phr of said mercaptosilane protected in the form of thioester is added to the mix from said first mixing step; and a final mixing step, in which curing agents are added.

Preferably, said cross-linkable unsaturated-chain polymer base comprises 20 to 60 phr of an S-SBR polymer mix containing 25-45% styrene and 20-70% vinyl, and comprising 20-40% of a first fraction with a mean molecular weight of 50-100x10³ and a molecular weight distribution of ≤1.5, and 80-60% of a second fraction with a mean molecular weight of 800-1500x10³ and a molecular weight distribution of ≤3.0.

Preferably, said cross-linkable unsaturated-chain polymer base also comprises 10 to 50 phr of E-SBR or S-SBR, and 0 to 20 phr of BR. S-SBR stands for styrenebutadiene rubber in solution, and E-SBR for styrenebutadiene rubber in emulsion.

Preferably, at least 2 phr of a plasticizing ester, preferably octyl-oleate, are added to the mix at said first mixing step.

Preferably, said trialkoxymercaptoalkyl-silane has the general formula (I)

R¹R²₂Si-R³-SH (I)

where :
R¹ represents a linear, cyclic or branched alkoxyl group with 1 to 8 carbon atoms; R² represents a linear, cyclic or branched alkoxyl group with 1 to 8 carbon atoms, or -O-(Y-O)m4-X (where Y represents a linear, cyclic or branched saturated or unsaturated divalent hydrocarbon group with 1 to 20 carbon atoms, X represents a linear, cyclic or branched alkyl group with 1 to 9 carbon atoms, and m4 represents a number of 1 to 40); and R³ represents a linear, cyclic or branched saturated or unsaturated alkylene group with 1 to 12 carbon atoms.

Preferably, said trialkoxymercaptoalkyl-silane is a trialkoxymercaptopropyl-silane.

Preferably, the trialkoxymercaptopropyl-silane has the general formula (II)

SH(CH₂)₃SiR⁴R⁵₂ (II)

where:
R⁴ is -OCH₂CH₃, and
R⁵ is -O(CH₂CH₂O)₅(CH₂)₁₃CH₃

Preferably, said mercaptosilane protected in the form of thioester has the general formula (III)

R⁶ₓR⁷_{y}R⁸_{z}SiR⁹SCOR¹⁰ (III)

where:
R⁶ represents an atom or a monovalent group selected from -Cl, -Br, R¹¹O-, R¹¹C(=O)O-, R¹¹R¹²C=NO-, R¹¹R¹²CNO-, R¹¹R¹²N- and - (OSi R¹¹R¹²)ₕ(OSi R¹¹R¹²R¹³), where R¹¹, R¹² and R¹³, which may the same or different, each represent a hydrogen atom or a monovalent hydrocarbon group with 1 to 18 carbon atoms, and h represents a number of 1 to 4; R⁷ is either the same as R⁶, or a hydrogen atom or a monovalent hydrocarbon group with 1 to 18 carbon atoms; R⁸ is either the same as R⁶ and/or R⁷, or a hydrogen atom or -[O(R¹⁴O)ⱼ]0.5, where R¹⁴ represents an alkylene group with 1 to 18 carbon atoms, and j represents an integer of 1 to 4; R⁹ represents a divalent hydrocarbon group with 1 to 18 carbon atoms; R¹⁰ represents a monovalent hydrocarbon group with 1 to 18 carbon atoms; and x, y and z represent integers satisfying the relations x+y+2z=3, 0≤x≤3, 0≤y≤2 and 0≤z≤1.

Preferably, the mercaptosilane protected in the form of thioester has the structural formula :

(CH₃CH₂O) ₃Si (CH₂) ₃SCO (CH₂) ₆CH₃

### BEST MODE FOR CARRYING OUT THE INVENTION

The following are non-limiting examples for a clearer understanding of the present invention.

### EXAMPLES

Three control compounds (A-C) and a compound (D) in accordance with the teachings of the present invention were produced. More specifically, compound A is a standard tread compound of acknowledged satisfactory characteristics; compound B is a compound in which merely the ingredients individually affording particular advantages are added; and compound C is a compound in which the two types of silane coupling agents are added simultaneously to the mix.

Each compound was subsequently tested to assess wet road-holding and cold-weather performance, rolling and wear resistance, viscosity, and hydrocarbon emissions.

The example compounds described were produced as follows :

### - First mixing step -

Before commencing the mixing operation, a 230-270-litre tangential-rotor mixer was loaded with the cross-linkable unsaturated-chain polymer base, the silica, the silane coupling agent, oil, carbon black, and stearic acid to a fill factor of 66-72%.

The mixer was operated at a speed of 40-60 rpm, and the resulting mix was unloaded on reaching a temperature of 140-160°C.

### - Second mixing step -

The mix from the first step was mixed again in a mixer operated at 40-60 rpm, and was unloaded on reaching a temperature of 130-150°C. At this second mixing step, the second silane coupling agent was added to compound D.

### - Third mixing step -

The curing system (sulphur, accelerants, antioxidants/antiozonants, zinc oxide) was added to the mix from the second step to a fill factor of 63-67%.

The mixer was operated at a speed of 20-40 rpm, and the resulting mix was unloaded on reaching a temperature of 100-110°C.

Table I shows the compositions in phr of the four compounds.

**TABLE I**

| | A | B | C | D |
|---|---|---|---|---|
| E-SBR | 70 | 35 | 35 | 35 |
| BR | 30 | 30 | 30 | 30 |
| LMW S-SBR | -- | 35 | 35 | 35 |
| SILICA | 100 | 180 | 180 | 180 |
| SILANE | 10 | -- | -- | -- |
| Trialkoxymercaptoalkyl-silane | -- | 18 | 18 | 18 |
| Mercaptosilane protected in the form of thioester | -- | -- | 8* | 8** |
| OIL | 30 | 35 | 35 | 35 |
| Octyl-oleate | -- | 15 | 15 | 15 |
| Carbon black | 10 | 10 | 10 | 10 |
| Stearic acid | 1 | 1 | 1 | 1 |
| Sulphur | 1.5 | 1.5 | 1.5 | 1.5 |
| Accelerants | 3.5 | 3.5 | 3.5 | 3.5 |
| Antioxidants/antiozonants | 3.5 | 3.5 | 3.5 | 3.5 |
| Zinc oxide | 2.5 | 2.5 | 2.5 | 2.5 |

| | | | | |
|---|---|---|---|---|
| * indicates the 8 phr of mercaptosilane protected in the form of thioester were added simultaneously with the trialkoxymercaptoalkyl-silane at the first mixing step. ** indicates the 8 phr of mercaptosilane protected in the form of thioester were added at the second mixing step. | | | | |

LMW S-SBR is a rubber containing 25-45% styrene and 20-70% vinyl, and comprising :
- 20-40% of a first fraction with a mean molecular weight of 50-100x10³ and a molecular weight distribution of ≤1.5; and
- 80-60% of a second fraction with a mean molecular weight of 800-1500x10³ and a molecular weight distribution of ≤3.0.

SILICA is a commercial product marketed by RHODIA as 1115, and has a surface area of 110 m²/g.

SILANE is a commercial silane coupling agent marketed by DEGUSSA as S175.

The trialkoxymercaptoalkyl-silane is of formula (1).

The mercaptosilane protected in the form of thioester has the formula :

(CH₃CH₂O)₃Si(CH₂)₃SCO(CH₂)₆CH₃

The accelerants used are a mixture of MBTS, TBBS and DPG, and are the same for all the compounds.

The antioxidants/antiozonants used are the same for all the compounds.

As stated, compounds A-D were tested to assess wet road-holding and cold-weather performance, rolling and wear resistance, viscosity, and hydrocarbon emissions, and the results indexed with respect to compound A.

More specifically, E' values were measured at -20°C as per ASTM Standard D5992 to determine cold-weather performance, and TanD values were measured at different temperatures as per ASTM Standard D5992 to determine wet road-holding and rolling resistance.

Abrasion resistance was tested as per DIN Standard 53 516, and viscosity measured as per ASTM Standard D1646.

Table II shows the test results indexed with respect to compound A.

**TABLE II**

| | A | B | C | D |
|---|---|---|---|---|
| Wet road-holding (↑) | 100 | 110 | 110 | 110 |
| Cold-weather performance (↑) | 100 | 100 | 100 | 100 |
| Abrasion resistance (↑) | 100 | 95 | 100 | 100 |
| Rolling resistance (↑) | 100 | 108 | 100 | 108 |
| Viscosity (↓) | 100 | 125 | 100 | 100 |
| Hydrocarbon emissions (↓) | 100 | 60 | 70 | 70 |

| | | | | |
|---|---|---|---|---|
| (↑) indicates the higher the value the better the performance. (↓) indicates the lower the value the better the performance. | | | | |

As shown in Table II, the compound (D) produced using the method according to the invention provides for better overall improvement as compared with control compounds B and C.

The method of producing compound D by adding the two types of silane coupling agents in two different mixing steps represents a preferred embodiment of the invention, but does not exclude the possibility of the two types of silane coupling agents being added at different times in the same mixing step.

## Claims

1. A method of producing a rubber compound, comprising mixing at least one cross-linkable unsaturated-chain polymer base, silica, a first type of silane coupling agent, and a second type of silane coupling agent; said method being **characterized in that** said second type of silane coupling agent is added to the mix after said first type of silane coupling agent has reacted with said silica.

2. A method of producing a rubber compound, as claimed in Claim 1, **characterized in that** said first type of silane coupling agent is a trialkoxymercaptoalkyl-silane, and said second type of silane coupling agent is a mercaptosilane protected in the form of thioester.

3. A method of producing a rubber compound, as claimed in Claim 2, **characterized by** comprising a first mixing step of mixing at least said cross-linkable unsaturated-chain polymer base, 50 to 250 phr of said silica, and 2 to 30 phr of said trialkoxymercaptoalkyl-silane; a second mixing step, in which 2 to 15 phr of said mercaptosilane protected in the form of thioester is added to the mix from said first mixing step; and a final mixing step, in which curing agents are added.

4. A method of producing a rubber compound, as claimed in Claim 3, **characterized in that** said cross-linkable unsaturated-chain polymer base comprises 20 to 60 phr of an S-SBR polymer mix containing 25-45% styrene and 20-70% vinyl, and comprising 20-40% of a first fraction with a mean molecular weight of 50-100x10³ and a molecular weight distribution of ≤1.5, and 80-60% of a second fraction with a mean molecular weight of 800-1500x10³ and a molecular weight distribution of ≤3.0.

5. A method of producing a rubber compound, as claimed in Claim 4, **characterized in that** said cross-linkable unsaturated-chain polymer base comprises 10 to 50 phr of E-SBR or S-SBR, and 0 to 20 phr of BR.

6. A method of producing a rubber compound, as claimed in Claim 5, **characterized in that** at least 2 phr of a plasticizing ester are added to the mix at said first mixing step.

7. A method of producing a rubber compound, as claimed in Claim 6, **characterized in that** said plasticizing ester is octyl-oleate.

8. A method of producing a rubber compound, as claimed in one of Claims 2 to 7, **characterized in that** said trialkoxymercaptoalkyl-silane has the general formula (I)
R¹R²₂Si-R³-SH (I)
where :
R¹ represents a linear, cyclic or branched alkoxyl group with 1 to 8 carbon atoms; R² represents a linear, cyclic or branched alkoxyl group with 1 to 8 carbon atoms, or -O-(Y-O)m4-X (where Y represents a linear, cyclic or branched saturated or unsaturated divalent hydrocarbon group with 1 to 20 carbon atoms, X represents a linear, cyclic or branched alkyl group with 1 to 9 carbon atoms, and m4 represents a number of 1 to 40); and R³ represents a linear, cyclic or branched saturated or unsaturated alkylene group with 1 to 12 carbon atoms.

9. A method of producing a rubber compound, as claimed in Claim 8, **characterized in that** said trialkoxymercaptoalkyl-silane is a trialkoxymercaptopropyl-silane.

10. A method of producing a rubber compound, as claimed in Claim 9, **characterized in that** the trialkoxymercaptopropyl-silane has the general formula (II)
SH(CH₂)₃SiR⁴R⁵₂ (II)
where:
R⁴ is -OCH₂CH₃, and
R⁵ is -O(CH₂CH₂O)₅(CH₂)₁₃CH₃

11. A method of producing a rubber compound, as claimed in one of claims 2 to 9, **characterized in that** said mercaptosilane protected in the form of thioester has the structural formula (III)
R⁶ₓR⁷_{y}R⁸_{z}SiR⁹SCOR¹⁰ (III)
where:
R⁶ represents an atom or a monovalent group selected from -Cl, -Br, R¹¹O-, R¹¹C(=O)O-, R¹¹R¹²C=NO-, R¹¹R¹²CNO-, R¹¹R¹²N- and - (OSi R¹¹R¹²)ₕ(OSi R¹¹R¹²R¹³), where R¹¹, R¹² and R¹³, which may the same or different, each represent a hydrogen atom or a monovalent hydrocarbon group with 1 to 18 carbon atoms, and h represents a number of 1 to 4; R⁷ is either the same as R⁶, or a hydrogen atom or a monovalent hydrocarbon group with 1 to 18 carbon atoms; R⁸ is either the same as R⁶ and/or R⁷, or a hydrogen atom or - [O(R¹⁴O)ⱼ]0.5, where R¹⁴ represents an alkylene group with 1 to 18 carbon atoms, and j represents an integer of 1 to 4; R⁹ represents a divalent hydrocarbon group with 1 to 18 carbon atoms; R¹⁰ represents a monovalent hydrocarbon group with 1 to 18 carbon atoms; and x, y and z represent integers satisfying the relations x+y+2z=3, 0≤x≤3, 0≤y≤2 and 0≤z≤1.

12. A method of producing a rubber compound, as claimed in Claim 11, **characterized in that** said mercaptosilane protected in the form of thioester has the structural formula :
(CH₃CH₂O)₃Si(CH₂)₃SCO(CH₂)₆CH₃

13. A tread compound, **characterized by** being produced using the method as claimed in one of the foregoing Claims.

14. A tread produced from a compound as claimed in Claim 13.

15. A tyre comprising a tread as claimed in Claim 14.

## Patentansprüche

1. Verfahren zur Herstellung einer Kautschukverbindung, umfassend Mischen zumindest einer vernetzbaren ungesättigt-kettigen Polymerbasis, von Siliciumdioxid bzw. Silica, eines ersten Typs von Silankupplungsmittel, und eines zweiten Typs von Silankupplungsmittel; wobei das Verfahren **dadurch gekennzeichnet ist, dass** der zweite Typ von Silankupplungsmittel zu der Mischung zugefügt wird, nachdem der erste Typ von Silankupplungsmittel mit dem Siliciumdioxid reagiert hat.

2. Verfahren zur Herstellung einer Kautschukverbindung, wie in Anspruch 1 beansprucht, **dadurch gekennzeichnet, dass** der erste Typ von Silankupplungsmittel ein Trialkoxymercaptoalkylsilan ist, und der zweite Typ von Silankupplungsmittel ein Mercaptosilan geschützt in Form eines Thioesters ist.

3. Verfahren zur Herstellung einer Kautschukverbindung, wie in Anspruch 2 beansprucht, **gekennzeichnet durch** das Umfassen eines ersten Mischschritts des Mischens zumindest der vernetzbaren ungesättigt-kettigen Polymerbasis, 50 bis 250 phr des Siliciumdioxids, und 2 bis 30 phr des Trialkoxymercaptoalkylsilans; eines zweiten Mischschritts, in dem 2 bis 15 phr des Mercaptosilans geschützt in der Form eines Thioesters zu der Mischung aus dem ersten Mischschritt zugegeben werden; und eines abschließenden Mischschritts, in dem Härtungsmittel zugegeben werden.

4. Verfahren zur Herstellung einer Kautschukverbindung, wie in Anspruch 3 beansprucht, **dadurch gekennzeichnet, dass** die vernetzbare ungesättigt-kettige Polymerbasis 20 bis 60 phr einer S-SBR-Polymermischung enthaltend 25-45% Styrol und 20-70% Vinyl umfasst, und umfassend 20-40% von einer ersten Fraktion mit einem mittleren Molekulargewicht von 50-100x10³ und einer Molekulargewichtsverteilung von ≤1,5 und 80-60% von einer zweiten Fraktion mit einem mittleren Molekulargewicht von 800-1500x10³ und einer Molekulargewichtsverteilung von ≤3,0.

5. Verfahren zur Herstellung einer Kautschukverbindung, wie in Anspruch 4 beansprucht, **dadurch gekennzeichnet, dass** die vernetzbare ungesättigt-kettige Polymerbasis 10 bis 50 phr von E-SBR oder S-SBR und o bis 20 phr von BR umfasst.

6. Verfahren zur Herstellung einer Kautschukverbindung, wie in Anspruch 5 beansprucht, **dadurch gekennzeichnet, dass** mindestens 2 phr von einem plastifizierenden Ester zu der Mischung in dem ersten Mischschritt zugegeben werden.

7. Verfahren zur Herstellung einer Kautschukverbindung, wie in Anspruch 6 beansprucht, **dadurch gekennzeichnet, dass** der plastifizierende Ester Octyloleat ist.

8. Verfahren zur Herstellung einer Kautschukverbindung, wie in einem der Ansprüche 2 bis 7 beansprucht, **dadurch gekennzeichnet, dass** das Trialkoxymercaptoalkylsilan die allgemeine Formel (I) aufweist
R¹R²₂Si-R³-SH (I)
wobei:
R¹ eine lineare, zyklische oder verzweigte Alkoxylgruppe mit 1 bis 8 Kohlenstoffatomen darstellt; R² eine lineare, zyklische oder verzweigte Alkoxylgruppe mit 1 bis 8 Kohlenstoffatomen oder -O-(Y-O)m₄-X darstellt (wobei Y eine lineare, zyklische oder verzweigte gesättigte oder ungesättigte bivalente Kohlenwasserstoffgruppe mit 1 bis 20 Kohlenstoffatomen darstellt, X eine lineare, zyklische oder verzweigte Alkylgruppe mit 1 bis 9 Kohlenstoffatomen darstellt, und m4 eine Zahl von 1 bis 40 darstellt); und R³ eine lineare, zyklische oder verzweigte gesättigte oder ungesättigte Alkylengruppe mit 1 bis 12 Kohlenstoffatomen darstellt.

9. Verfahren zur Herstellung einer Kautschukverbindung, wie in Anspruch 8 beansprucht, **dadurch gekennzeichnet, dass** das Trialkoxymercaptoalkylsilan ein Trialkoxymercaptopropylsilan ist.

10. Verfahren zur Herstellung einer Kautschukverbindung, wie in Anspruch 9 beansprucht, **dadurch gekennzeichnet, dass** das Trialkoxymercaptopropylsilan die allgemeine Formel (II) aufweist
SH (CH₂)₃SiR⁴R⁵₂ (II)
wobei:
R4 -OCH₂CH₃ ist, und
R⁵ -O(CH₂CH₂O)₅(CH₂)₁₃CH₃ ist.

11. Verfahren zur Herstellung einer Kautschukverbindung, wie in einem der Ansprüche 2 bis 9 beansprucht, **dadurch gekennzeichnet, dass** das Mercaptosilan geschützt in der Form eines Thioesters die Strukturformel (III) aufweist
R⁶ₓR⁷_{y}R⁸_{z}SiR⁹SCOR¹⁰ (III)
wobei:
R⁶ ein Atom oder eine monovalente Gruppe ausgewählt aus -Cl,-Br, R¹¹O-, R¹¹C(=O) O-, R¹¹R¹²C=NO-, R¹¹R¹²CNO-, R¹¹R¹²N- und-(OSi R¹¹R¹²)ₕ(OSi R¹¹R¹²R¹³) darstellt, wobei R¹¹, R¹² und R¹³, die dasselbe oder unterschiedlich sein können, jeweils ein Wasserstoffatom oder eine monovalente Kohlenwasserstoffgruppe mit 1 bis 18 Kohlenstoffatomen darstellen, und h eine Zahl von 1 bis 4 darstellt; R⁷ entweder dasselbe ist wie R⁶, oder ein Wasserstoffatom oder eine monovalente Kohlenwasserstoffgruppe mit 1 bis 18 Kohlenstoffatomen; R⁸ entweder dasselbe wie R⁶ und/oder R⁷ oder ein Wasserstoffatom oder -[O(R¹⁴O)ⱼ]0,5 ist, wobei R¹⁴ eine Alkylengruppe mit 1 bis 18 Kohlenstoffatomen darstellt, und j eine ganze Zahl von 1 bis 4 darstellt; R⁹ eine bivalente Kohlenwasserstoffgruppe mit 1 bis 18 Kohlenstoffatomen darstellt; R¹⁰ eine monovalente Kohlenwasserstoffgruppe mit 1 bis 18 Kohlenstoffatomen darstellt; und x, y und z ganze Zahlen darstellen, die die Relationen x+y+2z=3, 0≤x≤3, o≤y≤2 und 0≤z≤1 erfüllen.

12. Verfahren zur Herstellung einer Kautschukverbindung, wie in Anspruch 11 beansprucht, **dadurch gekennzeichnet, dass** das Mercaptosilan, das in der Form eines Thioesters geschützt ist, die Strukturformel aufweist:
(CH₃CH₂O)₃Si (CH₂)₃SCO(CH₂)₆CH₃.

13. Laufflächenverbindung, **dadurch gekennzeichnet, dass** sie unter Verwendung des in einem der vorhergehenden Ansprüche beanspruchten Verfahrens hergestellt wird.

14. Lauffläche, hergestellt aus einer Verbindung, wie in Anspruch 13 beansprucht.

15. Reifen, umfassend eine Lauffläche wie in Anspruch 14 beansprucht.

## Revendications

1. Procédé pour produire une composition de caoutchouc, comprenant le mélange d'au moins un polymère à chaîne insaturée réticulable de base, de silice, d'un premier type d'agent de couplage du type silane et d'un second type d'agent de couplage du type silane ; ledit procédé étant **caractérisé en ce que** ledit second agent de couplage du type silane est ajouté au mélange après que ledit premier agent de couplage du type silane ait réagi avec ladite silice.

2. Procédé pour produire une composition de caoutchouc suivant la revendication 1, **caractérisé en ce que** ledit premier type d'agent de couplage du type silane est un trialkoxymercaptoalkyl-silane, et ledit second type d'agent de couplage du type silane est un mercaptosilane protégé sous forme d'un thioester.

3. Procédé pour produire une composition de caoutchouc suivant la revendication 2, **caractérisé en ce qu'**il comprend une première étape de mélange consistant à mélanger au moins ledit polymère à chaîne insaturée réticulable de base, 50 à 50 phr de ladite silice et 2 à 30 phr dudit trialkoxymercaptoalkyl-silane ; une deuxième étape de mélange, dans laquelle 2 à 15 phr dudit mercaptosilane protégé sous forme d'un thioester sont ajoutés au mélange provenant de ladite première étape de mélange ; et une étape de mélange finale, dans laquelle des agents de réticulation sont ajoutés.

4. Procédé pour produire une composition de caoutchouc suivant la revendication , **caractérisé en ce que** ledit polymère à chaîne insaturée réticulable de base comprend 20 à 60 phr d'un mélange de polymères S-SBR contenant 25 à 45 % de styrène et 20 à 70 % de groupes vinyle, et comprenant 20 à 40 % d'une première fraction ayant un poids moléculaire moyen de 50-100 x 10³ et une distribution des poids moléculaires < 1,5, et 80 à 60 % d'une seconde fraction ayant un poids moléculaire moyen de 800-1500 x 10³ et une distribution des poids moléculaires ≤ 3,0.

5. Procédé pour produire une composition de caoutchouc suivant la revendication 4, **caractérisé en ce que** ledit polymère à chaîne insaturée réticulable de base comprend 10 à 50 phr de E-SBR ou S-SBR et 0 à 20 phr de BR.

6. Procédé pour produire une composition de caoutchouc suivant la revendication 5, **caractérisé en ce qu'**au moins 2 phr d'un ester plastifiant sont ajoutés au mélange lors de ladite première étape de mélange.

7. Procédé pour produire une composition de caoutchouc suivant la revendication 6, **caractérisé en ce que** ledit ester plastifiant est l'oléate d'octyle.

8. Procédé pour produire une composition de caoutchouc suivant une des revendications 2 à 7, **caractérisé en ce que** ledit trialkoxymercaptoalkyl-silane répond à la formule générale (I)
R¹R²2Si-R³-SH (I)
dans laquelle :
R¹ représente un groupe alkoxyle linéaire, cyclique ou ramifié ayant 1 à 8 atomes de carbone ; R² représente un groupe alkoxyle linéaire, cyclique ou ramifié ayant 1 à 8 atomes de carbone, ou -O-(Y-O)m4-X (dans lequel Y représente un groupe hydrocarboné divalent linéaire, cyclique ou ramifié, saturé ou insaturé, ayant 1 à 20 atomes de carbone, X représente un groupe alkyle linéaire, cyclique ou ramifié ayant 1 à 9 atomes de carbone, et m4 représente un nombre de 1 à 40) ; et R³ représente un groupe alkylène linéaire, cyclique ou ramifié, saturé ou insaturé, ayant 1 à 12 atomes de carbone.

9. Procédé pour produire une composition de caoutchouc suivant la revendication 8, **caractérisé en ce que** ledit trialkoxymercaptoalkyl-silane est un trialkoxymercaptopropyl-silane.

10. Procédé pour produire une composition de caoutchouc suivant la revendication 9, **caractérisé en ce que** le trialkxoymercaptopropyl-silane répond à la formule générale (II)
SH(CH₂)₃SiR⁴R⁵₂ (II)
dans laquelle :
R⁴ représente un groupe -OCH₂CH₃, et
R⁵ représente un groupe -O(CH₂CH₂O)₅(CH₂)₁₃CH₃.

11. Procédé pour produire une composition de caoutchouc suivant une des revendications 2 à 9, **caractérisé en ce que** ledit mercaptosilane protégé sous forme d'un thioester répond à la formule structurale (III)
R⁶ₓR⁷_{y}R⁸_{z}SiR⁹SCOR¹⁰ (III)
dans laquelle :
R⁶ représente un atome ou un groupe monovalent choisi entre des groupes -Cl, -Br, R¹¹O-, R¹¹C(=O)O-, R¹¹R¹²C=NO-, R¹¹R¹²CNO-, R¹¹R¹²N- et -(OSiR¹¹R¹²)ₕ(OSiR¹¹R¹²R¹³), dans lesquels R¹¹, R¹² et R¹³, qui peuvent être identiques ou différents, représentent chacun un atome d'hydrogène ou un groupe hydrocarboné monovalent ayant 1 à 18 atomes de carbone, et h représente un nombre de 1 à 4 ; R⁷, soit est identique à R⁶, soit représente un atome d'hydrogène ou un groupe hydrocarboné monovalent ayant 1 à 18 atomes de carbone ; R⁸, soit est identique à R⁶ et/ou R⁷, soit représente un atome d'hydrogène ou un groupe - [O(R¹⁴O)ⱼ]0,5, dans lequel R¹⁴ représente un groupe alkylène ayant 1 à 18 atomes de carbone, et j représente un nombre entier de 1 à 4 ; R⁹ représente un groupe hydrocarboné divalent ayant 1 à 18 atomes de carbone ; R¹⁰ représente un groupe hydrocarboné monovalent ayant 1 à 18 atomes de carbone ; et x, y et z représentent des nombres entiers satisfaisant les relations x+y+2z=3 , 0≤x≤3, 0≤y≤2 et 0≤z≤1

12. Procédé pour produire une composition de caoutchouc suivant la revendication 11, **caractérisé en ce que** ledit mercaptosiline protégé sous forme d'un thioester répond à la formule structurale :
(CH₃CH₂O)₃Si(CH₂)₃SCO (CH₂)₆CH₃.

13. Composition pour bande de roulement, caractérisée en qu'elle est produite en utilisant le procédé suivant une des revendications précédentes.

14. Bande de roulement produite à partir d'une composition suivant la revendication 13.

15. Bandage à pneumatique comprenant une bande de roulement suivant la revendication 14.
